# NEUE EUROPÄISCHE PATENTSCHRIFT

(11) **EP 2 937 593 B2**
(45) Veröffentlichungstag und Bekanntmachung des Hinweises auf die Entscheidung über den Einspruch: **27.05.2026**
(45) Hinweis auf die Patenterteilung: 01.05.2019
(21) Anmeldenummer: 15161828.7
(22) Anmeldetag: 31.03.2015
(51) Int. Cl.: F16F 9/32, F16F 9/02

(54) **GASDRUCKFEDER**
GAS COMPRESSION SPRING
VÉRIN À GAZ

(30) Priorität: 31.03.2014 DE 102014104479
(43) Veröffentlichungstag der Anmeldung: 28.10.2015
(73) Patentinhaber: Steinel Normalien AG, 78056 Villingen-Schwenningen (DE)
(72) Erfinder: Elfers, Heinz, 78056 Villingen-Schwenningen (DE); Feisthammel, Horst, 88662 Überlingen (DE)
(74) Vertreter: Westphal, Mussgnug & Partner Patentanwälte mbB

(56) Entgegenhaltungen:
- WO-A1-2010/088931
- WO-A1-2012/084712
- DE-A1- 102005 048 745
- DE-A1- 102006 030 929
- DE-A1- 102009 032 897
- DE-A1- 102009 032 897

## Beschreibung

Die Erfindung betrifft eine Gasdruckfeder gemäß dem Oberbegriff des Patentanspruchs 1.

Gasdruckfedern weisen üblicherweise ein zylindrisches Gehäuse mit einer Wandung, einem Bodenteil und einem eine Öffnung aufweisenden Deckelteil sowie einer Längsachse auf, wobei in dem Gehäuse entlang der Längsachse ein Kolben mit einer Außenfläche, einer Stirnseite und einer durch die Öffnung geführten Kolbenstange verschiebbar angeordnet ist. Zwischen dem Kolben, insbesondere zwischen der Stirnseite des Kolbens und dem Bodenteil des Gehäuses ist eine Gaskompressionskammer gebildet. Derartige Gasdruckfedern werden insbesondere in Werkzeugen oder Maschinen eingesetzt, um Hubbewegungen durchzuführen.

Ein häufig verwendetes Gas zur Befüllung der Gasdruckfedern ist Stickstoff. Gasdruckfedern sind mit Stickstoff oft bei Drucken zwischen 120 und 220 bar gefüllt. Zur Sicherheitsüberwachung ist es beispielsweise aus der DE 10 2007 034 416 A1 bekannt, Gasdruckfedern mit einem Sensor zur Überwachung von physikalischen Messgrößen innerhalb und/oder an der Gasdruckfeder auszustatten. Dieser Sensor ist jedoch in einem separaten Gehäuse an der Außenseite des zylindrischen Gehäuses der Gasdruckfeder angeordnet. Eine derartige Anordnung ist nachteilig, da die so ausgestatteten Gasdruckfedern nicht mehr in die standardisierten Ausnehmungen an den Werkzeugen oder Maschinen, die auf das zylindrische Gehäuse der Gasdruckfedern abgestimmt sind, eingesetzt werden können, ohne das Werkzeug oder die Maschine zu ändern. Aus DE 10 2005 048 745 A1 ist ein Druckmittelzylinder bekannt mit einem Gehäuse und einem in dem Gehäuse verschiebbar angeordneten Kolben, wobei ein Druckaufnehmer und eine Auswerteeinheit in dem Kolben angeordnet sind.

Bekannt ist auch aus WO 2010/088931 A1 eine Kolben-ZylinderAnordnung gemäß des Oberbegriffs des Anspruchs 1 mit einem Zylindergehäuse und einem in dem Zylindergehäuse beweglich angeordneten Kolben, wobei eine Messeinrichtung innerhalb des Zylindergehäuses angeordnet ist.

Die Aufgabe der Erfindung besteht daher darin, eine Gasdruckfeder bereitzustellen, welche einen Sensor aufweist, aber weiterhin flexibel einsetzbar ist.

Die Aufgabe wird erfindungsgemäß gelöst durch eine Gasdruckfeder mit den Merkmalen des Patentanspruchs 1.

Vorteilhafte Ausgestaltungen und Weiterbildungen der Erfindung sind in den abhängigen Ansprüchen angegeben.

Die erfindungsgemäße Gasdruckfeder mit einem zylindrischen Gehäuse, welches eine Wandung, ein Bodenteil und ein eine Öffnung aufweisendes Deckelteil sowie eine Längsachse aufweist, und mit einem in dem Gehäuse entlang der Längsachse verschiebbaren Kolben mit einer Außenfläche und einer Stirnseite, wobei zwischen dem Kolben und Gehäuse eine Gaskompressionskammer gebildet ist und wobei die Gasdruckfeder wenigstens einen Sensor zur Detektion wenigstens einer physikalischen Größe aufweist, wobei der wenigstens eine Sensor und eine Elektronik zur Verarbeitung der mit dem wenigstens einen Sensor detektierten Werte innerhalb der Außenmaße des zylindrischen Gehäuses angeordnet ist, zeichnet sich dadurch aus, dass der Sensor in dem Bodenteil des Gehäuses angeordnet ist. Das zylindrische Gehäuse der Gasdruckfeder wird somit in radialer Richtung durch den Sensor nicht vergrößert, sodass die Gasdruckfeder weiterhin in Ausnehmungen von Werkzeugen oder Maschinen einsetzbar ist, in welche auch Gasdruckfedern ohne Sensoren zur Detektion einer physikalischen Größe einsetzbar sind. Insbesondere müssen die Werkzeuge oder Maschinen nicht geändert werden, wenn Gasdruckfedern ohne einen Sensor zur Detektion einer physikalischen Größe gegen Gasdruckfedern mit Sensoren zur Detektion wenigstens einer physikalischen Größe ausgetauscht werden sollen.

Durch die Anordnung der Elektronik innerhalb der Außenmaße des zylindrischen Gehäuses können einerseits die gängigen Außenmaße des Gehäuses in Form des zylindrischen, insbesondere kreiszylindrischen, Gehäuses beibehalten werden. Andererseits kann durch eine Auswerteelektronik innerhalb der Gasdruckfeder bereits eine Auswertung der detektierten Werte der physikalischen Größen innerhalb der Gasdruckfeder erfolgen.

Da der Sensor in dem Bodenteil des Gehäuses angeordnet ist, ist Auch bei kleinen Gasdruckfedern in dem Bodenteil ausreichend Platz zur Anordnung des Sensors und der zusätzlichen Elektronik. Insbesondere grenzt das Bodenteil an die Gaskompressionskammer an, sodass Möglichkeiten bestehen, physikalische Größen innerhalb der Gaskompressionskammer mit Hilfe des in dem Bodenteil angeordneten Sensors zu detektieren.

Eine bevorzugte Ausführungsform der Erfindung sieht vor, dass das Bodenteil einen Hohlraum aufweist und der Sensor in einer in der der Gaskompressionskammer zugewandten Wandung des Bodenteils angeordneten Durchgangsöffnung angeordnet ist. Dies ermöglicht eine direkte Detektion einer physikalischen Größe innerhalb der Gaskompressionskammer mittels des Sensors.

Vorteilhafterweise weist das Bodenteil ein erstes Bodenteilelement und ein zweites Bodenteilelement auf, wobei das erste Bodenteilelement auf das zweite Bodenteilelement aufgesetzt ist und die beiden Bodenteilelemente durch eine Dichtung gegeneinander abgedichtet sind. Durch eine derartige Ausgestaltung ist ein Einbringen des Sensors und gegebenenfalls weiterer Komponenten in das Bodenteil auf einfache Art und Weise möglich.

Bevorzugt weist das erste Bodenteilelement eine Ausnehmung auf, in welcher ein Werkzeug zum Entfernen des ersten Bodenteilelements von dem zweiten Bodenteilelement einsetzbar ist und welche vorzugsweise ein Gewinde aufweist. Eine derartige Ausnehmung ermöglicht ein einfaches Entfernen des ersten Bodenteilelements von dem zweiten Bodenteilelement, welche gegebenenfalls durch hohe in der Gaskompressionskammer herrschende Drücke fest ineinander gepresst sind.

Gemäß einer vorteilhaften Weiterbildung der Erfindung ist die Gaskompressionskammer zwischen der Stirnseite des Kolbens und dem Bodenteil des Gehäuses gebildet, so dass eine sogenannte Ein-Kammer-Gaskompressionskammer gebildet wird, oder weist zwei Kammern auf, wobei eine erste Kammer zwischen dem Kolben und dem Deckelteil und eine zweite Kammer zwischen der Stirnseite des Kolbens und dem Bodenteil des Gehäuses gebildet ist, so dass eine sogenannte Zwei-Kammer-Gaskompressionskammer gebildet wird. Bei einer Ein-Kammer-Gaskompressionskammer ist der Kolben gegen die Innenwandung des Gehäuses abgedichtet, während bei einer Zwei-Kammer-Gaskompressionskammer ein Gasfluss von dem Bereich zwischen dem Kolben und dem Deckelteil zu dem Bereich zwischen dem Kolben und dem Bodenteil möglich ist und eine Abdichtung zwischen der Kolbenstange und dem Gehäuse in der Öffnung des Deckelteils erfolgt.

Vorteilhafterweise ist das Deckelteil des Gehäuses einstückig mit der Wandung des Gehäuses verbunden, wodurch Undichtigkeiten vermieden werden können. Zudem können die bei der Hubbewegung des Kolbens auftretenden Kräfte günstig aufgenommen werden.

Gemäß einer bevorzugten Ausführungsform der Erfindung ist das Bodenteil des Gehäuses mit der Wandung des Gehäuses über eine Schraubverbindung verbunden. Dies ermöglicht das Einsetzen verschiedener Bodenteile bei gleichbleibender Wandung des Gehäuses.

Vorteilhafterweise erfolgt die Energieversorgung des Sensors und/oder einer Auswerteelektronik mittels einer Batterie, mittels eines Kabels oder mittels Energy Harvesting. Drahtlose Energieversorgungen sind dabei bevorzugt, um die Einbaumöglichkeiten der Gasdruckfeder möglichst wenig zu beschränken.

Gemäß einer besonders bevorzugten Ausführungsform der Erfindung ist der Sensor als Dünnfilm-Sensorelement ausgebildet. Dünnfilm-Sensorelemente sind unempfindlich gegen Schock und Vibrationsbelastungen, robust und Langzeitstabil.

Als physikalische Größen können insbesondere der Druck, die Temperatur, die Geschwindigkeit, die Kraft, die Vibration, die Dehnung und/oder der Weg detektiert werden.

Vorzugsweise ist die Auswerteelektronik in dem Bodenteil, insbesondere in einem Hohlraum des Bodenteils, angeordnet, da sich insbesondere bei kleinen Gasdruckfedern in der Regel dort ein ausreichend großes Volumen befindet.

Vorteilhafterweise ist die Auswerteelektronik mit einer Datenübertragungsschnittstelle verbunden, welche vorzugsweise als Kabelanschluss, als lichtgestützte Schnittstelle, als Schnittstelle mit induktiver oder kapazitiver Kopplung oder drahtlose Schnittstelle, insbesondere als Funkmodul, ausgebildet ist. Dadurch ergibt sich die Möglichkeit, von der Auswerteelektronik Daten nach außen zu kommunizieren.

Gemäß einer besonders bevorzugten Ausführungsform der Erfindung weist die Gasdruckfeder ein Funkmodul mit einer Antenne auf, wobei die Antenne in oder an dem Deckelteil oder im oder an das Deckelteil angrenzenden Bereich der Wandung des Gehäuses oder im oder an der Kolbenstange des Kolbens angeordnet ist. Dadurch wird ermöglicht, dass auch bei in einer Maschine oder einem Werkzeug verbauter Gasdruckfeder die Antenne derart frei liegt, dass ein Senden von Funksignalen möglich ist.

Vorteilhafterweise weist das Funkmodul ein Sende- und/oder Empfangselement auf, welches im Bodenteil oder im Deckelteil angeordnet ist. Eine Anordnung im Bodenteil bietet sich insbesondere an, wenn auch der Sensor und eine gegebenenfalls vorhanden Auswerteelektronik im Bodenteil angeordnet ist. Eine Anordnung im Deckelteil oder in der Kolbenstange bietet sich insbesondere dann an, wenn auch der Sensor und eine gegebenenfalls vorhandene Elektronik im Deckelteil oder in der Kolbenstange angeordnet sind.

Die Erfindung sieht in einer ersten Alternative vor, dass eine elektrische leitende Verbindung vom Bodenteil zum Deckelteil durch die Gaskompressionskammer, insbesondere an der Innenseite der Wandung des Gehäuses geführt ist. Bei Anordnung des Sende- und/oder Empfangselement im Bodenteil und Anordnung der Antenne im oberen Bereich der Gasdruckfeder muss eine Lösung für das Problem gefunden werden, die zu sendenden Signale von dem Sende- und/oder dem Empfangselement in die Antenne zu übertragen. Eine Lösung sieht vor, dass die elektrisch leitende Verbindung durch die Gaskompressionskammer geführt ist, wobei eine druckdichte Durchführung bevorzugt ist.

Gemäß einer zweiten Alternative der Erfindung ist eine elektrische leitende Verbindung vom Bodenteil zum Deckelteil an der Außenseite der Wandung des Gehäuses geführt, vorzugsweise in einer Nut oder auf einer Abflachung des Gehäuses. Eine druckdichte Durchführung durch die Gaskompressionskammer kann dabei entfallen. Eine Nut ist besonders einfach an dem Gehäuse zu fertigen. Eine Abflachung lässt sich ebenfalls leicht fertigen und belastet die Festigkeit des Gehäuses kaum. Durch die Führung der elektrisch leitenden Verbindung in einer Ausnehmung an der Außenseite der Wandung des Gehäuses werden die Außenmaße des zylindrischen Gehäuses nicht vergrößert, sodass auch eine derartige Gasdruckfeder weiterhin in die standardisierten Ausnehmungen an Werkzeugen oder Maschinen ist.

Eine dritte Alternative der Erfindung sieht vor, dass eine Daten- oder Signalübertragung aus dem Bodenteil in das Deckelteil drahtlos, induktiv, mittels Infrarotlicht oder mittels Lichtleiter erfolgt. Drahtlose Übertragungen weisen den Vorteil auf, dass keine elektrisch leitende Verbindung vom Bodenteil zum Deckelteil nötig ist, erfordern in der Regel jedoch eine Stromversorgung sowohl im Bodenteil für den Sensor als auch im Deckelteil für die Antenne.

Die Erfindung wird anhand der nachfolgenden Figuren ausführlich erläutert, wobei die Figuren 4 bis 6 und 10 erfindungsgemäße Ausführungsformen der Gasdruckfeder zeigen. Es zeigen:
- Fig. 1: einen Längsschnitt durch ein erstes Ausführungsbeispiel einer nicht erfindungsgemäßen Gasdruckfeder mit in dem Bodenteil angeordnetem Sensor,
- Fig. 2a: eine perspektivische Ansicht des Bodenteils der Gasdruckfeder gemäß Figur 1,
- Fig. 2b: eine Seitenansicht des Bodenteils gemäß Figur 2a,
- Fig. 2c: eine Draufsicht auf das Bodenteil gemäß Figur 2a,
- Fig. 2d: einen Schnitt entlang der Linie A-A in Figur 2c,
- Fig. 2e: einen Schnitt entlang der Linie B-B in Figur 2c,
- Fig. 3: einen Schnitt durch eine alternative Ausführungsform eines Bodenteils für eine Gasdruckfeder gemäß Figur 1,
- Fig. 4: einen Längsschnitt durch ein Ausführungsbeispiel einer erfindungsgemäßen Gasdruckfeder, bei welchem der Sensor im Bodenteil und eine Antenne im Deckelteil angeordnet ist,
- Fig. 5: einen Querschnitt durch ein abgewandeltes Ausführungsbeispiel der Gasdruckfeder gemäß Figur 4,
- Fig. 6: einen Querschnitt durch ein weiteres abgewandeltes Ausführungsbeispiels der Gasdruckfeder gemäß Figur 4,
- Fig. 7: einen Längsschnitt durch ein weiteres Ausführungsbeispiel einer nicht erfindungsgemäßen Gasdruckfeder, bei welcher der Sensor sowie die Antenne im Kolben angeordnet sind,
- Fig. 8: einen Längsschnitt durch ein weiteres Ausführungsbeispiel einer nicht erfindungsgemäßen Gasdruckfeder, bei welchem der Sensor und die Antenne im Deckelteil angeordnet sind,
- Fig. 9: einen Längsschnitt durch ein weiteres Ausführungsbeispiel einer nicht erfindungsgemäßen Gasdruckfeder, bei welcher der Sensor und die Antenne im Deckelteil angeordnet sind und
- Fig. 10: einen Längsschnitt durch ein weiteres Ausführungsbeispiel einer erfindungsgemäßen Gasdruckfeder, bei welcher der Sensor im Bodenteil und die Antenne am Kolben angeordnet ist.

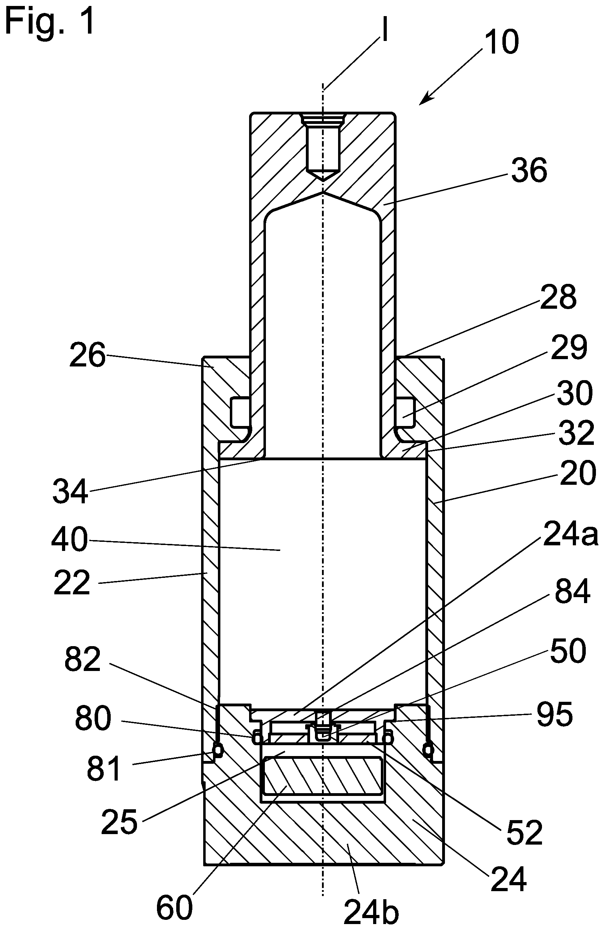

Fig. 1 zeigt einen Längsschnitt durch ein erstes Ausführungsbeispiel einer Gasdruckfeder 10, welcher ein Gehäuse 20 und einen in dem Gehäuse 20 verschiebbar angeordneten Kolben 30 aufweist. Das Gehäuse 20 ist zylindrisch, insbesondere kreiszylindrisch, ausgebildet und weist eine Wandung 22, ein Bodenteil 24 und ein Deckelteil 26 auf. Das Deckelteil 26 ist insbesondere einstückig mit der Wandung 22 verbunden, während das Bodenteil 24 vorteilhafterweise lösbar an der Wandung 22 angeordnet ist und beispielsweise mittels einer Schraubverbindung mit der Wandung 22 verbindbar ist.

Der Kolben 30 ist zylindrisch ausgebildet mit einer Außenfläche 32 sowie einer Stirnseite 34 und einer Kolbenstange 36. Das Deckelteil 26 des Gehäuses 20 weist eine Öffnung 28 auf, durch welche die Kolbenstange 36 aus dem Gehäuse 20 nach außen geführt ist.

Das Gehäuse 20 weist eine Längsachse l auf, entlang welcher der Kolben 30 in dem Gehäuse 20 verschiebbar angeordnet ist.

Zwischen dem Kolben 30 und dem Gehäuse 20 ist eine Gaskompressionskammer 40 gebildet. Die Gaskompressionskammer ist in der Öffnung 28, durch welche die Kolbenstange 36 aus dem Gehäuse 20 nach außen geführt ist, durch eine Dichtung 29 abgedichtet. An der Außenfläche des Kolbens 30 kann Gas von einem ersten Teil der Gaskompressionskammer 40, welcher zwischen der Stirnseite 34 des Kolbens 30 und dem Bodenteil 24 des Gehäuses 20 angeordnet ist, in einen zweiten Teil der Gaskompressionskammer 40, welcher zwischen dem Kolben 30 und dem Deckelteil 26 gebildet ist, strömen. Auf diese Weise wird eine sogenannte Zwei-Kammer-Gaskompressionskammer 40 gebildet.

In der Gasdruckfeder 10, insbesondere der Gaskompressionskammer 40, ist ein Gas, beispielsweise Stickstoff, angeordnet, welches bei Einführen des Kolbens 30 in das Gehäuse 20 verdichtet wird, so dass sich ein Druck aufbaut. Dieser erzeugt eine Rückstellkraft auf den Kolben 30. Derartige Gasdruckfedern 10 werden insbesondere in Werkzeugen oder Maschinen eingesetzt.

Die Gasdruckfeder 10 weist einen Sensor 50 zur Detektion einer physikalischen Größe auf. Beispielsweise kann der Sensor 50 als Drucksensor, Temperatursensor, Kraftsensor oder Wegsensor ausgebildet sein. In einer bevorzugten Ausführungsform kann der Sensor 50 als kombinierter Druck- und Temperatursensor ausgebildet sein. Der Sensor 50 ist beispielsweise in das Gehäuse 20 derart integriert, dass er physikalische Größen, beispielsweise Druck und/oder Temperatur, in der Gaskompressionskammer 40 detektieren kann. Der Sensor 50 kann als Dünnfilm-Sensorelement ausgebildet sein, welches kompakt aufgebaut und störunempfindlich ist. Der Sensor 50 ist derart in das Gehäuse 20 integriert, dass die zylindrische Form des Gehäuses 20 erhalten bleibt.

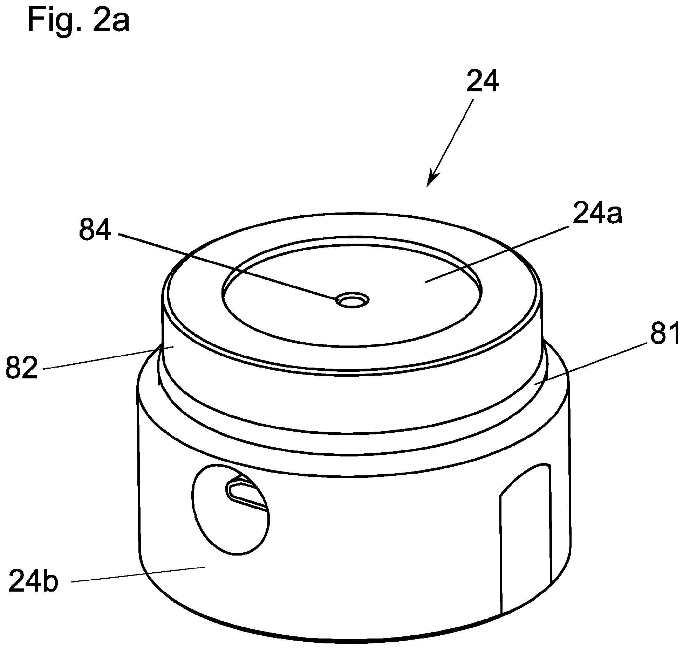

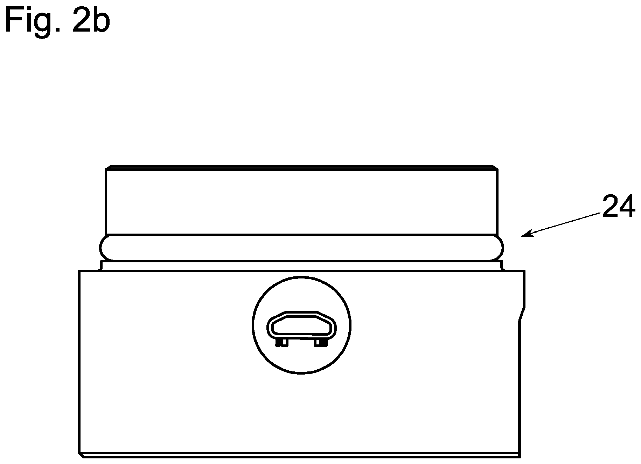

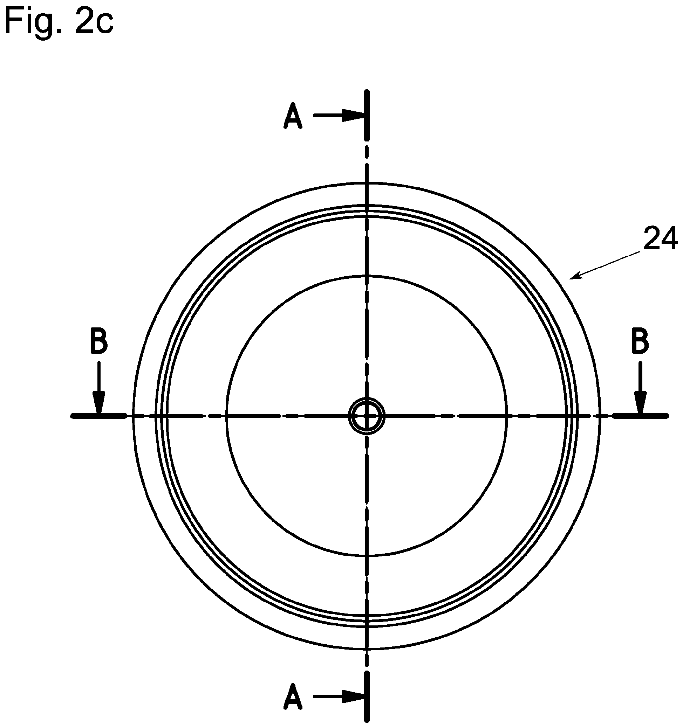

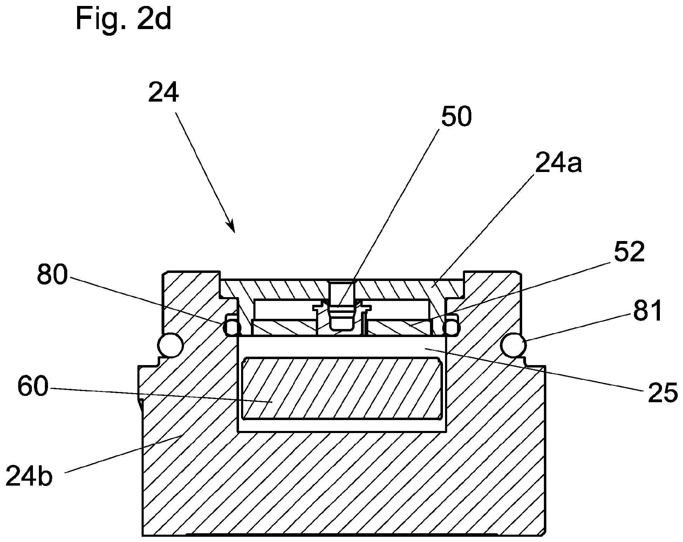

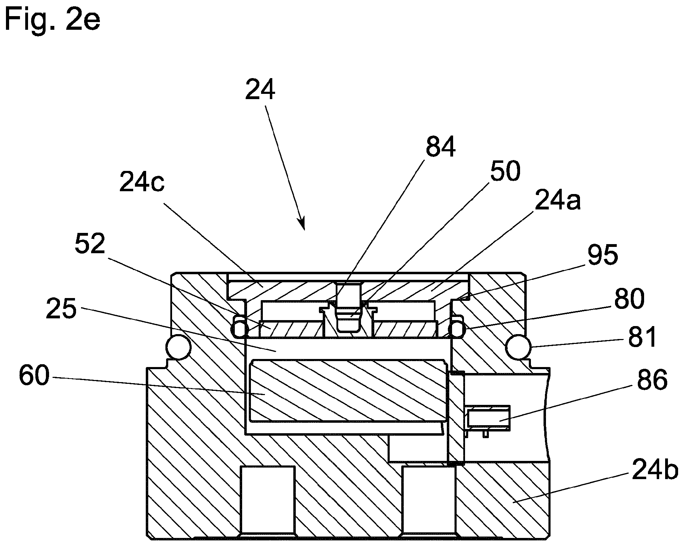

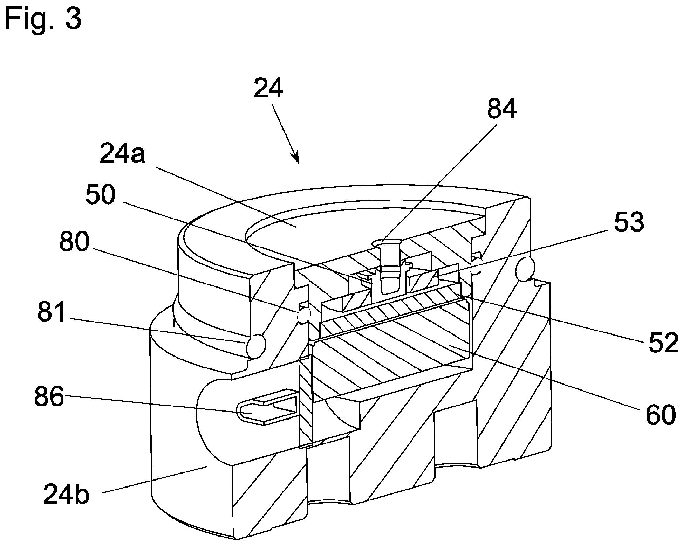

In dem in Figur 1 dargestellten Ausführungsbeispiel der Gasdruckfeder 10 ist der Sensor 50 in das Bodenteil 24 integriert. Das Bodenteil 24 weist insbesondere einen Hohlraum 25 auf. Der Sensor 50 ist in einer der Gaskompressionskammer 40 zugewandten Wandung 24c des Bodenteils 24 in einer Durchgangsöffnung angeordnet. Damit hat der Sensor 50 direkten ungehinderten Zugang zu der Gaskompressionskammer 40, um in der Gaskompressionskammer 40 physikalische Größen wie beispielsweise Druck oder Temperatur zu detektieren. Der Sensor 50 ist in der Durchgangsöffnung druckdicht angeordnet, sodass die Gaskompressionskammer 40 in ihrer Dichtigkeit nicht beeinträchtigt wird. Die Anschlusskontakte des Sensors 50 sind in den Hohlraum 25 geführt. Dort ist der Sensor 50 mit einer Elektronik 52 verbunden. Die Elektronik 52 kann beispielsweise auf einer Platine angeordnet sein, auf welcher der Sensor 50 entweder wie in den Figur 1, 2e und 2f dargestellt direkt oder wie in Figur 3 dargestellt mittels einer Zwischenplatine 53 kontaktiert ist. In dem dargestellten Ausführungsbeispiel wird die Stromversorgung des Sensors 50 und der Elektronik 52 durch eine Batterie 60 hergestellt. Alternativ oder zusätzlich kann die Stromversorgung auch mittels eines Kabels, induktiv, mittels eines Akkumulators oder mittels Energy Harvesting erfolgen.

Wie insbesondere in Figur 2e erkennbar, weist das Bodenteil 24 eine Datenübertragungsschnittstelle 86 in Form eines USB-Anschlusses auf. Die Datenübertragungsschnittstelle 86 kann alternativ als sonstiger Kabelanschluss, als lichtgestützte Schnittstelle, als Schnittstelle mit induktiver oder kapazitiver Kopplung oder auch als Funkschnittstelle ausgebildet sein.

Das Bodenteil 24 weist vorteilhafterweise ein erstes Bodenteilelement 24a und ein zweites Bodenteilelement 24b auf. Das erste Bodenteilelement 24a bildet eine Art Deckel des zweiten Bodenteilelements 24b, wobei im auf das zweite Bodenteilelement24b auf- oder eingesetztem Zustand des ersten Bodenteilelements 24a ein geschlossenes Bodenteil 24 gebildet wird. Insbesondere wird das erste Bodenteilelement 24a auf eine Stufe 95 des zweiten Bodenteilelements 24b aufgelegt. Zwischen den Anlageflächen, mit welchen das erste Bodenteilelement 24a und das zweite Bodenteilelement 24b aneinander liegen, ist eine Dichtung 80 angeordnet, um eine druckdichte Abdichtung zwischen dem ersten Bodenteilelement 24a und dem zweiten Bodenteil 24b zu ermöglichen.

Um das erste Bodenteilelement 24a von dem zweiten Bodenteilelement 24b entfernen zu können, weist beispielsweise das erste Bodenteilelement 24a eine Ausnehmung 84 auf, welche insbesondere durch einen Teil der Durchgangsöffnung in dem ersten Bodenteilelement 24a gebildet ist, in welcher der Sensor 50 angeordnet ist. In die Ausnehmung 84 kann ein Werkzeug derart eingesetzt und in axialer Richtung fixiert werden, dass ein Entfernen des ersten Bodenteilelements 24 von dem zweiten Bodenteilelement 24b möglich ist. Insbesondere kann dazu die Ausnehmung 84 ein Innengewinde aufweisen.

Das Bodenteil 24 weist abschnittsweise ein Außengewinde 82 auf, über welches das Bodenteil 24 in die Wandung 22 des Gehäuses 20 eingeschraubt wird. Um diese Schraubverbindung besser abdichten zu können, ist insbesondere angrenzend an das Gewinde 82 an dem Bodenteil 24 beispielsweise in einer umlaufenden Nut eine Dichtung 81 angeordnet, welche das Bodenteil 24 gegen die Wandung 22 abdichtet.

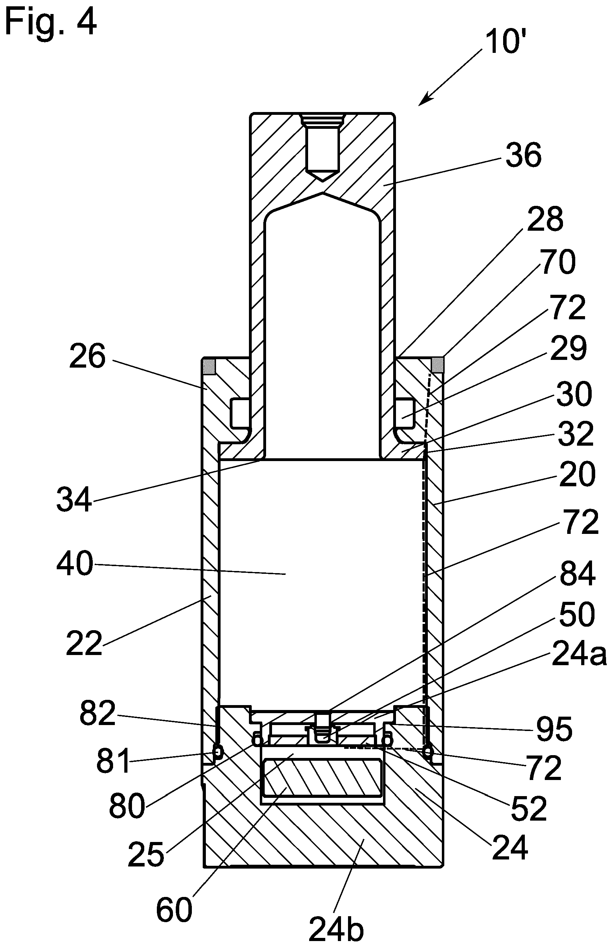

Wird die Gasdruckfeder 10 in einer Maschine oder einem Werkzeug angeordnet, wird das Gehäuse 20 der Gasdruckfeder 10 nahezu vollständig in eine zylindrische Ausnehmung der Maschine oder des Werkzeugs eingesetzt. Somit ist die Gasdruckfeder 10 in der Regel derart abgeschirmt, dass ein im Bodenteil 24 angeordnetes Funkmodul keine Signale nach außen senden kann. Die in den Figuren 4 bis 10 dargestellten Ausführungsbeispiele weisen statt einer kabelgebundenen Datenübertragungsschnittstelle 86 ein Funkmodul mit einer Antenne 70 auf, wobei die Antenne 70 im oberen Bereich der Gasdruckfeder 10, beispielsweise wie nachfolgend beschrieben in oder an dem Deckteil 26, im oder am an das Deckelteil 26 angrenzenden Bereich der Wandung 22 des Gehäuses 20 oder im oder am Kolben 30, beispielsweise im oder an der Kolbenstange 36, angeordnet ist.

Das in Figur 4 dargestellte Ausführungsbeispiel einer Gasdruckfeder 10' unterscheidet sich von dem in Figur 1 dargestellten Ausführungsbeispiel der Gasdruckfeder 10 dadurch, dass die Datenübertragungsschnittstelle 86 als Funkmodul mit der Antenne 70 ausgebildet ist, wobei die Antenne 70 im Deckelteil 26 des Gehäuses 20 der Gasdruckfeder 10' angeordnet ist. Sowohl der Sensor 50 als auch die Elektronik 52 sind wie bei dem in Figur 1 dargestellten Ausführungsbeispiel in dem Bodenteil 24 angeordnet. Das Funkmodul weist neben der Antenne 70 weiterhin ein Sende- und/oder Empfangselement auf, welches in der Elektronik 52 im Bodenteil 24 angeordnet ist. Um die zu übertragenden Signale von der Elektronik 52 an die Antenne 70 übergeben zu können, ist in dem in Figur 4 dargestellten Ausführungsbeispiel eine elektrisch leitende Verbindung von dem Bodenteil 24 zu dem Deckelteil 26 durch die Gaskompressionskammer 40 geführt, insbesondere derart, dass die elektrisch leitende Verbindung 72 an der Innenseite der Wandung 22 des Gehäuses 20 geführt ist. Die elektrisch leitende Verbindung 72 muss dabei druckdicht aus dem Hohlraum 25 des Bodenteils 24 in die Gaskompressionskammer 40 und druckdicht zwischen der Wandung 22 und der Stirnseite 34 des Kolbens 30 in das Deckelteil 26 zu der Antenne 70 geführt werden.

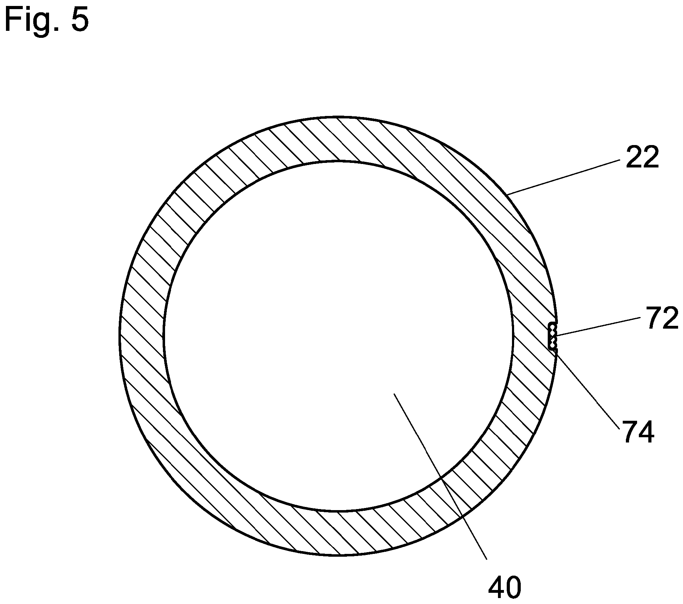

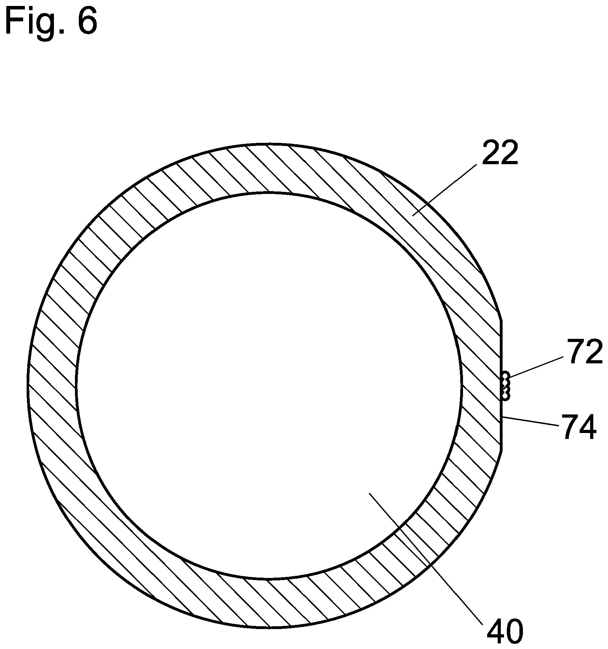

Die Figuren 5 und 6 zeigen Querschnitte durch eine Gasdruckfeder 10' wie in Figur 4 dargestellt, welche sich von der in Figur 4 dargestellten Gasdruckfeder 10' dadurch unterscheiden, das die elektrisch leitende Verbindung 72 nicht durch die Gaskompressionskammer 40 geführt ist, sondern auf der Außenseite des Gehäuses 20 vom Bodenteil 24 zum Deckelteil 26 geführt ist. Um die Außenmaße der Gasdruckfeder 10' dadurch nicht zu vergrößern, weist das Gehäuse 20 in dem in Figur 5 dargestellten Ausführungsbeispiel auf der Außenseite der Wandung 22 vorteilhafterweise eine parallel zur Längsachse l des Gehäuses 20 verlaufende Nut 74 auf, in welcher die elektrisch leitende Verbindung 72 angeordnet ist.

Bei dem in Figur 6 dargestellten Ausführungsbeispiel weist das Gehäuse 20 an der Außenseite der Wandung 22 eine Abflachung 76 auf, welche sich insbesondere durch einen Schnitt parallel zur Längsachse l ergibt, auf welcher die elektrisch leitende Verbindung 72 angeordnet werden kann, ohne die ursprünglichen Ausmaße des ursprünglich zylindrischen Gehäuses 20 zu vergrößern.

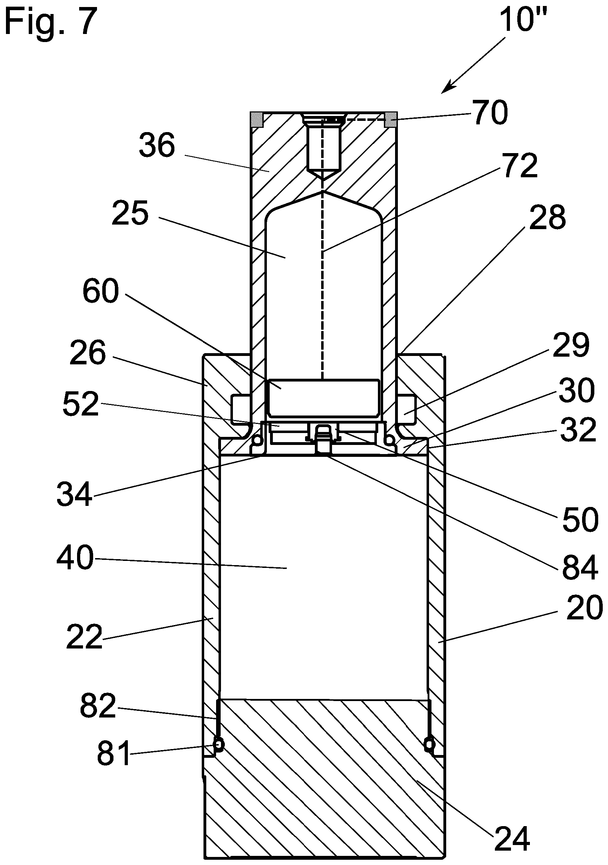

Das in Figur 7 dargestellt weitere Ausführungsbeispiel einer Gasdruckfeder 10" unterscheidet sich von dem in Figur 4 dargestellten Ausführungsbeispiel darin, dass sowohl der Sensor 50 als auch die zugehörige Elektronik 52 und die Antenne 70 in dem Kolben 30 angeordnet sind. Dabei ist der Sensor 50 insbesondere in der Stirnseite 34 des Kolbens 30 angeordnet, während die Antenne 70 in der Kolbenstange 36, insbesondere an der Außenseite oder Oberseite der Kolbenstange 36, angeordnet ist. Die Elektronik 52 ist über die elektrisch leitende Verbindung 72 mit der Antenne 70 verbunden, welche bei Anordnung der Antenne 70 auf der Außenseite der Kolbenstange 36 insbesondere druckdicht durch den Kolben 30 geführt sein sollte. Eine elektrisch leitende Verbindung 72 aus dem Bodenteil 24 in das Deckelteil 26 ist bei dieser Ausgestaltung nicht von Nöten.

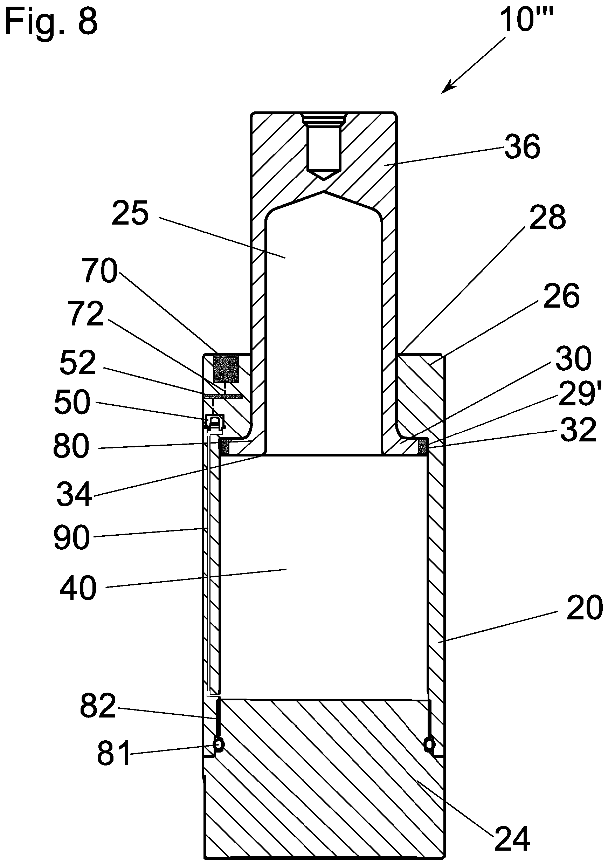

Das in Figur 8 dargestellte Ausführungsbeispiel einer Gasdruckfeder 10''' unterscheidet sich von dem in Figur 4 dargestellten Ausführungsbeispiel der Gasdruckfeder 10' dadurch, dass der Sensor 50, die Elektronik 52 und das Funkmodul mit der Antenne 70 im Deckelteil 26 der Gasdruckfeder 10 angeordnet sind. Die Antenne 70 ist dabei an der Außenseite des Gehäuses 20 der Gasdruckfeder 10 im Deckelteil 26 oder in eine entsprechende Ausnehmung des Deckelteils 26 eingesetzt. Der Sensor 50 kann innerhalb des Deckelteils 26 angeordnet sein und ist druckdicht in einen Kanal 90 eingesetzt, welcher die detektierende Seite des Sensors 50 mit der Gaskompressionskammer 40 verbindet. Der Kanal 90 ist insbesondere in der Wandung 22 des Gehäuses 20 angeordnet.

Ein weiterer Unterschied des in Figur 8 dargestellten Ausführungsbeispiels der Gasdruckfeder 10''' liegt darin, dass es sich bei dieser Gasdruckfeder 10''' um eine Gasdruckfeder mit einer Ein-Kammer Gaskompressionskamer 40 handelt. Dazu ist der Kolben 30 an seiner Außenfläche 32 über eine Dichtung 29' gegenüber der Wandung 22 des Gehäuses 20 abgedichtet, so dass ein Gasfluss von dem Bereich zwischen der Stirnseite 34 des Kolbens 30 und dem Bodenteil 24 des Gehäuses 20 in den Bereich zwischen dem Kolben 30 und dem deckelteil 26 unterbunden wird. Eine Dichtung in der Öffnung 28, durch welche die Kolbenstange 36 aus dem Gehäuse 20 geführt wird, kann dann entfallen.

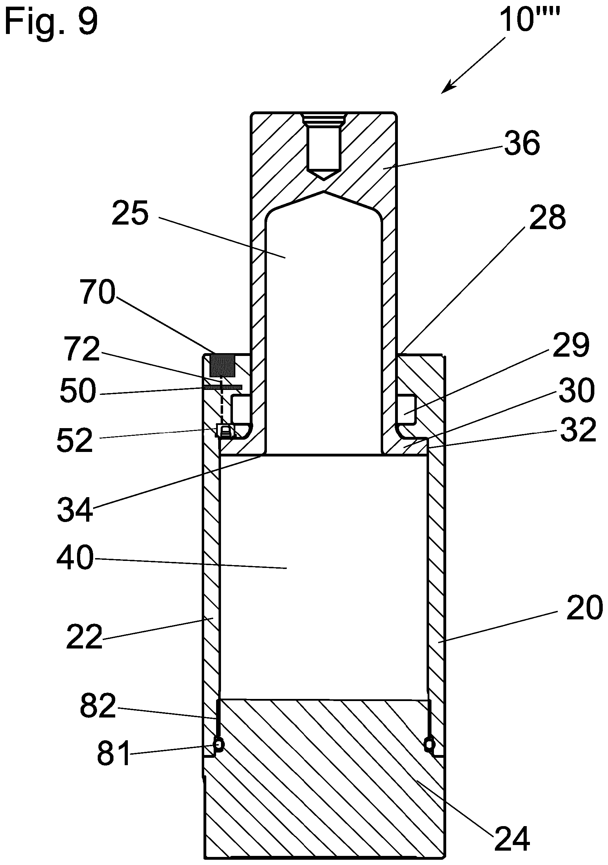

Das in Figur 9 dargestellte Ausführungsbeispiel einer Gasdruckfeder 10'''' unterscheidet sich von dem in Figur 8 dargestellten Ausführungsbeispiel der Gasdruckfeder 10''' dadurch, dass der Sensor 50, welcher im Deckelteil 26 angeordnet ist, mit seiner detektierenden Seite an der Kammer anliegt, welche durch den Kolben 30 und das Deckelteil 26, insbesondere die dem Bodenteil 24 zugewandte Seite des Deckelteils 26 und die dem Deckelteil 26 zugewandte rückseitige Fläche der Stirnseite 34 des Kolbens 30, gebildet ist. Zudem handelt es sich bei diesem Ausführungsbeispiels der Gasdruckfeder 10'''' wiederum um eine Gasdruckfeder mit einer Zwei-Kammer-Gaskompressionskammer 40, bei welcher die Dichtung 29 in der Öffnung 28 im Deckelteil 26 angeordnet ist. Somit ändern sich auch in dem Teil der Gaskompressionsammer 40, welcher zwischen dem Deckelteil 26 und dem Kolben 30 gebildet ist, mit jedem Hub des Kolbens 30 verschiedene physikalische Größen wie insbesondere Druck und Temperatur, sodass auch mit einem derartig angeordneten Sensor 50 gewisse Zustandsgrößen der Gasdruckfeder 10'''' detektiert werden können.

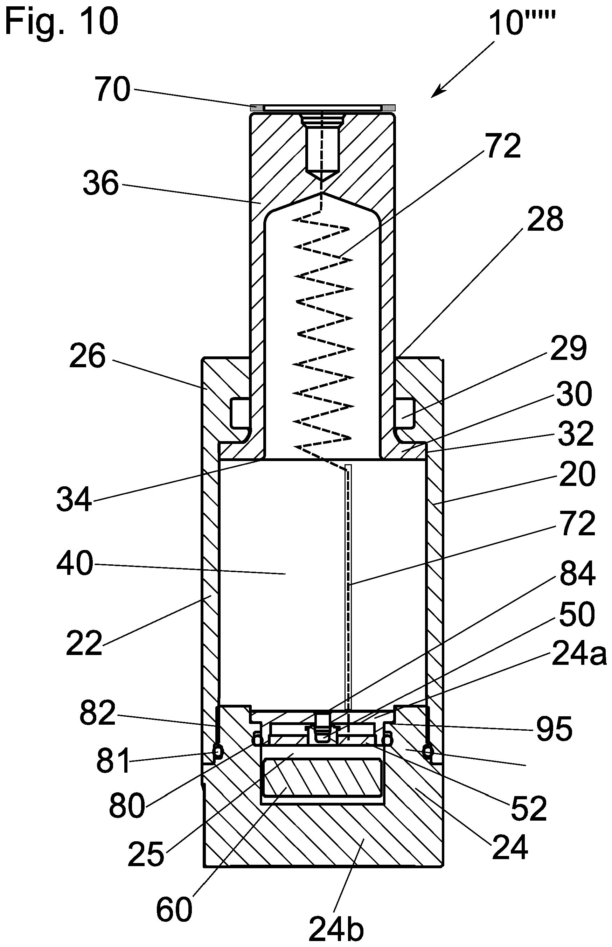

Figur 10 zeigt ein weiteres Ausführungsbeispiel einer Gasdruckfeder 10''''', bei welcher der Sensor 50 und die Elektronik 52 wie im in Figur 1 dargestellten Ausführungsbeispiel in dem Bodenteil 24 angeordnet ist, während die Antenne 70 außen an der dem Gehäuse 20 abgewandten Stirnseite der Kolbenstange 26 angeordnet ist. Die Positionierung der Antenne 70 im oder am dem Gehäuse 20 abgewandten Ende der Kolbenstange 26 ist besonders günstig, da der dem Gehäuse 20 abgewandte Bereich der Kolbenstange 26 in der Regel auch in der Einbausituation der Gasdruckfeder aus der Ausnehmung beispielsweise des Werkzeugs hervorragt. Die elektrisch leitende Verbindung 72 zur Verbindung der Elektronik 52 und des in der Elektronik enthaltenen Funkmoduls mit der Antenne 70 ist durch den Innenraum der Gaskompressionskammer 40 geführt. Statt diese jedoch an der Wandung entlang zu führen, wird diese durch den Innenraum, beispielsweise etwa mittig, von dem Bodenteil durch den Kolben 30 zur Kolbenstange 36, welche vorteilhafterweise hohl ausgebildet ist, geführt. Eine druckdichte Durchführung einerseits vom Innenraum des Bodenteils 24 in die Gaskompressionskammer 40 und andererseits von der Gaskompressionskammer 40 an die äußere Stirnseite der Kolbenstange 36 ist dann erforderlich. Zum Längenausgleich der elektrisch leitenden Verbindung 72 bei der Hubbewegung des Kolbens 30 ist vorgesehen, dass die elektrisch leitende Verbindung zumindest abschnittsweise nach Art einer Schraubenfeder in Windungen gewickelt oder nach Art einer Ziehharmonika gefaltet oder in Schlaufen gelegt ist.

Selbstverständlich können verschiedene Aspekte unterschiedlicher Ausführungsbeispiele miteinander kombiniert werden.

### Bezugszeichenliste

- 10: Gasdruckfeder
- 10': Gasdruckfeder
- 10": Gasdruckfeder
- 10''': Gasdruckfeder
- 10'''': Gasdruckfeder
- 20: Gehäuse
- 22: Wandung
- 24: Bodenteil
- 24a: erstes Bodenteilelement
- 24b: zweites Bodenteilelement
- 24c: Wandung
- 25: Hohlraum
- 26: Deckelteil
- 28: Öffnung
- 29: Dichtung
- 29': Dichtung
- 30: Kolben
- 32: Außenfläche
- 34: Stirnseite
- 36: Kolbenstange
- 40: Gaskompressionskammer
- 50: Sensor
- 52: Elektronik
- 53: Zwischenplatine
- 60: Batterie
- 70: Antenne
- 72: elektrisch leitende Verbindung
- 74: Nut
- 76: Abflachung
- 80: Dichtung
- 81: Dichtung
- 82: Gewinde
- 84: Ausnehmung
- 86: Datenübertragungsschnittstelle
- 90: Kanal
- 95: Stufe
- l: Längsachse

## Patentansprüche

1. Gasdruckfeder (10, 10', 10", 10‴, 10ʺʺ, 10‴ʺ) mit einem zylindrischen Gehäuse (20), welches eine Wandung (22), ein Bodenteil (24) und ein eine Öffnung (28) aufweisendes Deckelteil (26) sowie eine Längsachse (1) aufweist, und mit einem in dem Gehäuse (20) entlang der Längsachse (1) verschiebbaren Kolben (30) mit einer Außenfläche (32) und einer Stirnseite (34), wobei zwischen dem Kolben (30) und dem Gehäuse (20) eine Gaskompressionskammer (40) gebildet ist und wobei die Gasdruckfeder (10, 10', 10", 10‴, 10ʺʺ, 10‴ʺ) wenigstens einen Sensor (50) zur Detektion wenigstens einer physikalischen Größe aufweist, wobei der wenigstens eine Sensor (50) und eine Elektronik (52) zur Verarbeitung der mit dem wenigstens einen Sensor detektierten Werte innerhalb der Außenmaße des zylindrischen Gehäuses (20) angeordnet ist, wobei der Sensor (50) in dem Bodenteil (24) des Gehäuses (20) angeordnet ist, und wobei die Gasdruckfeder (10', 10", 10‴, 10ʺʺ, 10‴ʺ) ein Funkmodul mit einer Antenne (70) aufweist, wobei die Antenne (70) in oder an dem Deckelteil (26) oder im oder am an das Deckelteil (26) angrenzenden Bereich der Wandung (22) des Gehäuses (20) oder im oder an dem Kolben (30) angeordnet ist,
**dadurch gekennzeichnet, dass** eine elektrische Leitung (72) vom Bodenteil (24) zum Deckelteil (26) durch die Gaskompressionskammer (40), insbesondere an der Innenseite der Wandung (22) des Gehäuses (20), geführt ist, und/oder
eine elektrische Leitung (72) vom Bodenteil (24) zum Deckelteil (26) an der Außenseite der Wandung (22) des Gehäuses (20) geführt ist, vorzugsweise in einer Nut (74) oder auf einer Abflachung (76) des Gehäuses (20), oder eine Daten- oder Signalübertragung aus dem Bodenteil (24) in das Deckelteil (26) drahtlos, induktiv, mittels Infrarotlicht oder mittels Lichtleiter erfolgt.

2. Gasdruckfeder nach Anspruch 1,
**dadurch gekennzeichnet, dass** das Bodenteil (24) einen Hohlraum (25) aufweist und der Sensor (50) in einer in der der Gaskompressionskammer (40) zugewandten Wandung (24c) des Bodenteils (24) angeordneten Durchgangsöffnung angeordnet ist.

3. Gasdruckfeder nach Anspruch 2,
**dadurch gekennzeichnet, dass** das Bodenteil (24) ein erstes Bodenteilelement (24a) und ein zweites Bodenteilelement (24b) aufweist, wobei das erste Bodenteilelement (24a) auf das zweite Bodenteilelements (24a) aufgesetzt ist und die beiden Bodenteilelemente (24a, 24b) durch eine Dichtung (80) gegeneinander abgedichtet sind.

4. Gasdruckfeder nach Anspruch 3,
**dadurch gekennzeichnet, dass** das erste Bodenteilelement (24a) eine Ausnehmung (84) aufweist, in welche ein Werkzeug zum Entfernen des ersten Bodenteilelements (24a) von dem zweiten Bodenteilelement (24b) einsetzbar ist und welche vorzugsweise ein Gewinde aufweist.

5. Gasdruckfeder nach einem der vorhergehenden Ansprüche,
**dadurch gekennzeichnet, dass** die Gaskompressionskammer (40) zwischen der Stirnseite (34) des Kolbens (30) und dem Bodenteil (24) des Gehäuses (20) gebildet ist oder dass die Gaskompressionskammer (40) zwei Kammern aufweist, wobei eine erste Kammer zwischen dem Kolben (30) und dem Deckelteil (26) und eine zweite Kammer zwischen der Stirnseite (34) des Kolbens (30) und dem Bodenteil (24) des Gehäuses (20) gebildet ist.

6. Gasdruckfeder nach einem der vorhergehenden Ansprüche,
**dadurch gekennzeichnet, dass** das Deckelteil (26) des Gehäuses (20) einstückig mit der Wandung (22) des Gehäuses verbunden ist.

7. Gasdruckfeder nach einem der vorhergehenden Ansprüche,
**dadurch gekennzeichnet, dass** das Bodenteil (24) des Gehäuses (20) mit der Wandung (22) des Gehäuses (20) über eine Schraubverbindung verbunden ist.

8. Gasdruckfeder nach einem der vorhergehenden Ansprüche,
**dadurch gekennzeichnet, dass** die Energieversorgung des Sensors (50) und der Elektronik (52) mittels einer Batterie (60), mittels eines Kabels oder mittels Energy Harvesting erfolgt.

9. Gasdruckfeder nach einem der vorhergehenden Ansprüche,
**dadurch gekennzeichnet, dass** der Sensor (50) als Dünnfilm-Sensorelement ausgebildet ist.

10. Gasdruckfeder nach einem der vorhergehenden Ansprüche,
**dadurch gekennzeichnet, dass** die physikalische Größe der Druck, die Temperatur, die Geschwindigkeit, die Kraft, die Vibration, die Dehnung und/oder der Weg ist.

11. Gasdruckfeder nach einem der vorhergehenden Ansprüche,
**dadurch gekennzeichnet, dass** die Elektronik (52) in dem Bodenteil (24), insbesondere in einem Hohlraum (25) des Bodenteils (24), angeordnet ist.

12. Gasdruckfeder nach einem der vorhergehenden Ansprüche,
**dadurch gekennzeichnet, dass** die Elektronik (52) mit einer Datenübertragungsschnittstelle (86) verbunden ist, welche vorzugsweise als Kabelanschluss, als lichtgestützte Schnittstelle, als Schnittstelle mit induktiver oder kapazitiver Kopplung oder als drahtlose Schnittstelle, insbesondere als Funkmodul, ausgebildet ist.

13. Gasdruckfeder nach einem der vorhergehenden Ansprüche,
**dadurch gekennzeichnet, dass** das Funkmodul ein Sende- und/oder Empfangselement aufweist, welches im Bodenteil (24) oder im Deckelteil (26) oder im Kolben (30) angeordnet ist.

## Claims

1. Gas compression spring (10, 10', 10", 10‴, 10"", 10ʺ‴) with a cylindrical housing (20), which comprises a wall (22), a base part (24) and a cover part (26) having an opening (28) as well as a longitudinal axis (1), and with a piston (30) which has an outer surface (32) and an end face (34) and is displaceable in the housing (20) along the longitudinal axis (1), wherein a gas compression chamber (40) is formed between the piston (30) and the housing (20) and wherein the gas compression spring (10, 10', 10", 10‴, 10"", 10ʺ‴) has at least one sensor (50) for detection of at least one physical variable, wherein the at least one sensor (50) and an electronic system (52) for processing the values detected by the at least one sensor is arranged within the external dimensions of the cylindrical housing (20), wherein the sensor (50) is arranged in the base part (24) of the housing (20), wherein the gas pressure spring (10', 10", 10‴, 10"", 10ʺ‴) has a wireless module with an antenna (70), wherein the antenna (70) is arranged in or on the cover part (26) or in or on the region of the wall (22) of the housing (20) adjoining the cover part (26) or in or on the piston (30),
**characterised in that** an electrical line (72) from the base part (24) to the cover part (26) is passed through the gas compression chamber (40), in particular on the inner face of the wall (22) of the housing (20), and/or
an electrical line (72) from the base part (24) to the cover part (26) is guided on the outer face of the wall (22) of the housing (20), preferably in a groove (74) or on a flattened area (76) of the housing (20), or
a data or signal transmission from the base part (24) into the cover part (26) takes place wirelessly, inductively, by means of infrared light or by means of optical fibres.

2. Gas pressure spring according to claim 1, **characterised in that** the bottom part (24) has a hollow space (25) and the sensor (50) is arranged in a through opening in a wall (24c) of the bottom part (24) facing the gas compression chamber (40).

3. Gas pressure spring according to claim 2, **characterised in that** the base part (24) has a first base part element (24a) and a second base part element (24b), wherein the first base part element (24a) is fitted onto the second base part element (24a) and the two base part elements (24a, 24b) are sealed off with respect to one another by a gasket (80).

4. Gas pressure spring according to claim 3, **characterised in that** the first base part element (24a) has a cut-out (84) into which a tool can be inserted for removal of the first base part element (24a) from the second base part element (24b) and which is preferably a thread.

5. Gas pressure spring according to one of the preceding claims, **characterised in that** the gas compression chamber (40) is formed between the end face (34) of the piston (30) and the base part (24) of the housing (20) or that the gas compression chamber (40) has two chambers, wherein a first chamber is formed between the piston (30) and the cover part (26) and a second chamber is formed between the end face (34) of the piston (30) and the base part (24) of the housing (20).

6. Gas pressure spring according to one of the preceding claims, **characterised in that** the cover part (26) of the housing (20) is integrally connected to the wall (22) of the housing.

7. Gas pressure spring according to one of the preceding claims, **characterised in that** the bottom part (24) of the housing (20) is connected to the wall (22) of the housing by means of a screw connection.

8. Gas compression spring according to one of the preceding claims, **characterised in that** the power is supplied to the sensor (50) and the electronic system (52) by means of a battery (60), by means of a cable or by means of energy harvesting.

9. Gas pressure spring according to one of the preceding claims, **characterised in that** the sensor (50) is constructed as a thin-film sensor element.

10. Gas compression spring according to one of the preceding claims, **characterised in that** the physical variable is the pressure, the temperature, the speed, the force, the vibration, the expansion and/or the distance.

11. Gas pressure spring according to one of the preceding claims, **characterised in that** the electronic system (52) is arranged in the base part (24), in particular in a hollow space (25) of the base part (24).

12. Gas compression spring according to one of the preceding claims, **characterised in that** the electronic system (52) is connected to a data transmission interface (86) which is preferably designed as a cable connection, as a light-assisted interface, as an interface with inductive or capacitive coupling or as a wireless interface, in particular as a wireless module.

13. Gas pressure spring according to one of the preceding claims, **characterised in that** the wireless module has a transmitter element and/or receiver element which is arranged in the base part (24) or in the cover part (26) or in the piston (30).

## Revendications

1. Vérin à gaz (10, 10', 10", 10‴, 10ʺʺ, 10ʺ‴) comportant un boîtier cylindrique (20) comprenant une paroi (22), une partie de fond (24) et une partie de couvercle (26), ayant une ouverture (28) ainsi qu'un axe longitudinal (1), ainsi qu'un piston (30) pouvant coulisser dans le boîtier (20) le long de l'axe longitudinal (1) ayant une face externe (32) et une face frontale (34) dans lequel il est formé, entre le piston (30) et le boîtier (20), une chambre de compression de gaz (40), et le vérin à gaz (10, 10', 10'', 10‴, 10ʺʺ, 10ʺ‴) comportant au moins un capteur (50) permettant de détecter au moins une grandeur physique, le au moins un capteur (50) et une électronique (52) permettant le traitement de la grandeur détectée par le au moins un capteur étant situés dans les dimensions extérieures du boîtier cylindrique (20), le capteur (50) étant monté dans la partie de fond (24) du boîtier (20), et dans lequel
le vérin à gaz (10', 10", 10‴, 10ʺʺ, 10ʺ‴) comporte un module radio ayant une antenne (70), l'antenne (70) étant montée dans ou sur la partie de couvercle (26) ou dans ou sur la zone de la paroi (22) du boîtier (20) limitrophe de la partie de couvercle (26) ou dans ou sur le piston (30),
**caractérisé en ce qu'**
une conduite électrique (72) s'étend de la partie de fond (24) à la partie de couvercle (26), au travers de la chambre de compression du gaz (40), en particulier sur la face interne de la paroi (22) du boîtier (20), et/ou
une conduite électrique (72) s'étend de la partie de fond (24) à la partie de couvercle (26) sur la face externe de la paroi (22) du boîtier (20), et, de préférence dans une rainure (74) ou sur un méplat (76) du boîtier (20) ou
la transmission de données ou de signaux à partir de la partie de fond (24) dans la partie de couvercle (26) est effectuée sans fil, par induction, par lumière infrarouge ou au moyen de fibres optiques.

2. Vérin à gaz suivant la revendication 1,
**caractérisé en ce que**
la partie de fond (24) comporte un volume creux (25) et le capteur (50) est monté dans une ouverture traversante située dans la paroi (24c) de la partie de fond (24) tournée vers la chambre de compression du gaz (40).

3. Vérin à gaz suivant la revendication 2,
**caractérisé en ce que**
la partie de fond (24) comporte un premier élément de partie de fond (24a) et un second élément de partie de fond (24b), le premier élément de la partie de fond (24a) étant appliqué sur le second élément de la partie de fond (24a), et les deux éléments de la partie de fond (24a, 24b) étant rendus étanches l'un par rapport à l'autre par une garniture d'étanchéité (80).

4. Vérin à gaz suivant la revendication 3,
**caractérisé en ce que**
le premier élément de la partie de fond (24a) comporte un évidement (84) dans lequel peut être inséré un outil permettant de retirer le premier élément de la partie de fond (24a) du second élément de la partie de fond (24b), et qui comporte de préférence un filetage.

5. Vérin à gaz suivant l'une des revendications précédentes,
**caractérisé en ce que**
la chambre de compression du gaz (40) est formée entre la face frontale (34) du piston (30) et la partie de fond (24) du boîtier (20), ou la chambre de compression du gaz (40) comporte deux chambres, une première chambre étant formée entre le piston (30) et la partie de couvercle (26) et une seconde chambre étant formée entre la face frontale (34) du piston (30) et la partie de fond (24) du boîtier (20).

6. Vérin à gaz suivant l'une des revendications précédentes,
**caractérisé en ce que**
la partie de couvercle (26) du boîtier (20) est reliée en une seule pièce avec la paroi (22) du boîtier.

7. Vérin à gaz suivant l'une des revendications précédentes,
**caractérisé en ce que**
la partie de fond (24) du boîtier (20) est reliée à la paroi (22) du boîtier (20) par une liaison vissée.

8. Vérin à gaz suivant l'une des revendications précédentes,
**caractérisé en ce que**
l'alimentation en énergie du capteur (50) et de l'électronique (52) est effectuée au moyen d'une batterie (60), au moyen d'un câble ou par récupération d'énergie.

9. Vérin à gaz suivant l'une des revendications précédentes,
**caractérisé en ce que**
le capteur (50) est réalisé sous la forme d'un élément de capteur à film mince.

10. Vérin à gaz suivant l'une des revendications précédentes,
**caractérisé en ce que**
la grandeur physique est la pression, la température, la vitesse, la force, la vibration, la dilatation et/ou la course.

11. Vérin à gaz suivant l'une des revendications précédentes,
**caractérisé en ce que**
l'électronique (52) est montée dans la partie de fond (24), en particulier dans un volume creux (25) de la partie de fond (24).

12. Vérin à gaz suivant l'une des revendications précédentes,
**caractérisé en ce que**
l'électronique (52) est reliée à une interface de transmission de données (86), qui est de préférence réalisée sous la forme d'une connexion par câble, d'une interface optique, d'une interface à couplage inductif ou capacitif ou sous la forme d'une interface sans fil, en particulier d'un module radio.

13. Vérin à gaz suivant l'une des revendications précédentes,
**caractérisé en ce que**
le module radio comporte un élément émetteur et/ou récepteur qui est monté dans la partie de fond (24) ou dans la partie de couvercle (26) ou dans le piston (30).
